# EUROPÄISCHE PATENTSCHRIFT

(11) **EP 2 534 715 B1**
(45) Veröffentlichungstag und Bekanntmachung des Hinweises auf die Patenterteilung: **06.08.2014**
(21) Anmeldenummer: 12712586.2
(22) Anmeldetag: 30.03.2012
(51) Int. Cl.: H01M 6/42, H01G 9/08, H01G 11/82, H01M 10/0525, H01G 2/04, H01G 2/10, H01M 2/10, H01M 2/20, H01M 8/24, H01M 10/42

(54) **ENERGIESPEICHERANORDNUNG UND ENERGIESPEICHERVORRICHTUNG**
ENERGY STORAGE ARRANGEMENT AND ENERGY STORAGE DEVICE
ENSEMBLE ACCUMULATEUR D'ÉNERGIE ET DISPOSITIF ACCUMULATEUR D'ÉNERGIE

(30) Priorität: 04.04.2011 DE 102011016017
(43) Veröffentlichungstag der Anmeldung: 19.12.2012
(73) Patentinhaber: Li-Tec Battery GmbH, 01917 Kamenz (DE)
(72) Erfinder: SCHÄFER, Tim, 99768 Harztor (DE); MEINTSCHEL, Jens Dr., 02994 Bernsdorf (DE)
(74) Vertreter: Wallinger, Michael
(86) Internationale Anmeldenummer: PCT/EP2012/001434
(87) Internationale Veröffentlichungsnummer: WO 2012/136337

(56) Entgegenhaltungen:
- WO-A2-01/73914
- US-A- 2 801 276
- US-A1- 2009 252 994

## Beschreibung

Die vorliegende Erfindung betrifft eine Energiespeicheranordnung und eine Energiespeichervorrichtung.

Es ist bekannt, eine Mehrzahl von Elektroenergiespeicherzellen bzw. Batteriezellen, wie etwa Flachzellen auf Lithium-Ionen-Basis, zu Batterien zu stapeln und untereinander zu verschalten. Die Montage solcher Batterien ist oft mühsam. Auch ist es oft nicht möglich, einzelne Bestandteile (Zellen oder Teilmodule) auszutauschen, ohne die gesamte Batterie zu demontieren. Insbesondere nach dem Ausfall einer Batteriezelle ist es bei einigen Bauarten bekannter Batterien erforderlich, die Versorgung eines Verbrauchers zum Wechsel einer Batteriezelle zumindest zeitweise zu unterbrechen.

Die US 2009/0252994 A1 offenbart ein modulares Energiespeichersystem für Elektrofahrzeuge mit einer Anzahl an Teilenergiespeichern und einer Kontaktierungseinrichtung zum Kontaktieren der Teilenergiespeicher, welche eine Rahmenstruktur und einen Kontaktabschnitt mit zwei Anschlussenden aufweisen.

Es ist eine Aufgabe der vorliegenden Erfindung, die Versorgung eines angeschlossenen Verbrauchers insbesondere bei Ausfall einer Batteriezelle zu verbessern.

Die Aufgabe wird durch die Merkmale der unabhängigen Ansprüche gelöst. Vorteilhafte Weiterbildungen der Erfindung bilden den Gegenstand der Unteransprüche.

Gemäß einem Gesichtspunkt der Erfindung wird eine Energiespeicheranordnung vorgeschlagen, welche eine Mehrzahl von Teilenergiespeichern sowie eine Kontaktierungseinrichtung zur Kontaktierung mehrerer Teilenergiespeicher untereinander aufweist. Jeder Teilenergiespeicher weist eine Rahmenstruktur auf, welche einen Energiespeicherabschnitt mit einer Elektrodenanordnung und wenigstens zwei Anschlussenden hält. Der Teilenergiespeicher weist einen Druckabschnitt und einen Kontaktabschnitt auf. Die Anschlussenden des Energiespeicherabschnitts sind mit dem Kontaktabschnitt verbunden. Der Druckabschnitt ist ausgelegt und eingerichtet, die Kontaktierungseinrichtung elastisch gegen den Kontaktabschnitt zu drücken.

Als eine Energiespeicheranordnung wird im Sinne der Erfindung insbesondere eine Anordnung verstanden, die vorgesehen ist, insbesondere elektrische Energie aufzunehmen, zu speichern und wieder abzugeben, vorzugsweise unter Wandlung elektrischer Energie in chemische Energie und in umgekehrter Richtung.

Als ein Teilenergiespeicher wird im Sinne der Erfindung insbesondere eine in sich abgeschlossene Funktionseinheit der Energiespeicheranordnung verstanden, die für sich genommen vorgesehen ist, insbesondere elektrische Energie aufzunehmen, zu speichern und wieder abzugeben, vorzugsweise unter Wandlung elektrischer Energie in chemische Energie oder umgekehrt.

Als eine Speicherzelle wird im Sinne der Erfindung insbesondere eine galvanische Primär- oder Sekundärzelle (im Rahmen dieser Anmeldung werden Primär- oder Sekundärzellen unterschiedslos als Batteriezellen und eine daraus aufgebaute Energiespeichervorrichtung als Batterie bezeichnet) verstanden. Auch eine Brennstoffzelle, ein Hochleistungskondensator wie etwa Supercap oder dergleichen, oder eine Energiespeicherzelle anderer Art sind als Speicherzellen im Sinne der Erfindung zu verstehen. Insbesondere weist eine als Batteriezelle aufgebaute Speicherzelle einen aktiven Bereich oder aktiven Teil, in welchem die Wandlung elektrischer Energie in chemische Energie oder umgekehrt stattfindet, eine Einhausung zur Kapselung des aktiven Teils von der Umgebung und wenigstens zwei elektrische Pole auf. Der aktive Teil weist insbesondere eine Elektrodenanordnung auf, die vorzugsweise als Elektrodenstapel, als im Wesentlichen zylindrischer Elektrodenwickel oder als Flachwickel ausgebildet ist. Die Elektrodenanordnung ist mit Kollektorfolien, aktiven Schichten und Separatorschichten ausgebildet. Die aktiven Schichten sind als Beschichtungen der Kollektorfolien vorgesehen. Die Pole sind mit den Kollektorfolien elektrisch verbunden oder einstückig mit diesen ausgebildet.

Erfindungsgemäß ist der in dem Teilenergiespeicher ausgebildete Druckabschnitt ausgelegt und eingerichtet, die Kontaktierungseinrichtung elastisch gegen den Kontaktabschnitt des Teilenergiespeichers zu drücken. Vorteilhaft wird insbesondere eine Montage der Teilenergiespeicher in der Energiespeicheranordnung erleichtert. Weiter vorteilhaft wird eine Kontaktierung der Teilenergiespeicher untereinander zuverlässig sichergestellt. Im Sinne der Erfindung kann dabei ein Drücken der Kontaktierungseinrichtung gegen den Kontaktabschnitt des Teilenergiespeichers auch als Drücken des Kontaktabschnitts des Teilenergiespeichers gegen die Kontaktierungseinrichtung verstanden werden. Vorzugsweise ist der Druckabschnitt eines Teilenergiespeichers gegen dessen Kontaktabschnitt verspannt, insbesondere wenn der Teilenergiespeicher in die Energiespeicheranordnung eingesetzt ist.

Bei erfindungsgemäßer Ausbildung eines Teilenergiespeichers mit einem Druckabschnitt und einem Kontaktabschnitt, kann der Teilenergiespeicher unabhängig von benachbarten Teilenergiespeichern der Energiespeicheranordnung entnommen oder in die Energiespeicheranordnung eingefügt werden. Indem der Druckabschnitt die Kontaktierungseinrichtung in Richtung des Kontaktabschnitts drückt, kann ein insbesondere defekter Teilenergiespeicher während des laufenden Betriebs aus der Energiespeicheranordnung entnommen werden. Weiter kann ein Teilenergiespeicher während des laufenden Betriebs in die Energiespeicheranordnung eingesetzt werden. Folglich ist es nicht erforderlich, die Versorgung eines Verbrauchers bei erfindungsgemäßer Ausbildung der Teilenergiespeicher zum Wechsel eines Teilenergiespeichers zu unterbrechen. So wird die zugrundeliegende Aufgabe gelöst.

Vorzugsweise ist die Energiespeicheranordnung so ausgebildet, dass die Kontaktierungseinrichtung wenigstens zwei Leiterschienen aufweist. Unter einer Leiterschiene wird im Sinne der Erfindung ein im Wesentlichen durchgehendes, insbesondere elektrisch leitfähiges Bauelement verstanden. Zumindest zwei Leiterschienen der Kontaktierungseinrichtung sind voneinander elektrisch isoliert.

Vorzugsweise ist der Druckabschnitt durch einen Federabschnitt der Rahmenstruktur elastisch bewegbar. Vorteilhaft ist das Aneinanderdrücken der Kontaktierungseinrichtung und des Kontaktabschnitts des Teilenergiespeichers durch eine intrinsische Eigenschaft des Teilenergiespeichers bzw. dessen Rahmenstruktur und ohne weitere Bauelemente verwirklicht. Vorzugsweise ist das Material des Federabschnitt ausgestaltet, eine elastische und Verformung des Federabschnitts zu ermöglichen. Vorteilhaft bewirkt eine Rückstellkraft aus der Verformung des Federabschnitts, dass im Einbauzustand eines Teilenergiespeichers eine Leiterschiene der Kontaktierungseinrichtung insbesondere kraftschlüssig von Druckabschnitt und Kontaktabschnitt umfasst ist. Weiter vorteilhaft ist bewirkt, dass zwischen Kontaktabschnitt und einer elektrisch leitfähigen Leiterschiene ein elektrischer Kontakt besteht.

Vorzugsweise weist die Rahmenstruktur einen Aufnahmeabschnitt zur Aufnahme eines dem Teilenergiespeicher zugeordneten Abschnitts der Kontaktierungseinrichtung auf. Vorteilhaft ist ein Wechsel eines Teilenergiespeichers während der Versorgung eines Verbrauchers erleichtert. Vorzugsweise kann auch eine gekapselte, also von außen nicht ohne weiteres zugängliche Führung der Kontaktierungseinrichtung verwirklicht werden. Ferner kann auch die Kontaktierung mit der Kontaktierungseinrichtung innerhalb des Teilenergiespeichers bewerkstelligt werden.

Vorzugsweise ist der Aufnahmeabschnitt einseitig offen. Vorteilhaft, ist das Einbauen und Lösen der Teilenergiespeicher erleichtert, insbesondere während der Versorgung eines Verbrauchers.

Vorzugsweise weist der Aufnahmeabschnitt wenigstens einen Rastabschnitt zum Einrasten der Kontaktierungseinrichtung auf. Vorteilhaft ist ein unbeabsichtigtes Lösen eines Teilenergiespeichers erschwert.

Nach einem weiteren Gesichtspunkt der Erfindung wird auch eine Energiespeichervorrichtung vorgeschlagen mit einer Rahmenstruktur, welche einen Energiespeicherabschnitt mit einer Elektrodenanordnung und wenigstens zwei Anschlussenden hält, wobei die Rahmenstruktur einen Aufnahmeabschnitt zur Aufnahme wenigstens eines Abschnitts einer Kontaktierungseinrichtung zur Kontaktierung mehrerer Energiespeichervorrichtungen miteinander aufweist, wobei die Energiespeichervorrichtung einen Druckabschnitt und einen Kontaktabschnitt aufweist, wobei die Anschlussenden des Energiespeicherabschnitts mit dem Kontaktabschnitt verbunden sind und wobei der Druckabschnitt ausgelegt und eingerichtet ist, die Kontaktierungseinrichtung elastisch gegen den Kontaktabschnitt zu drücken.

Die Energiespeichervorrichtung kann ein Teilenergiespeicher im Sinne des vorherigen Erfindungsgesichtspunkts sein.

In weiteren Ausgestaltungen der Erfindung ist der Energiespeicherabschnitt entweder in der Rahmenstruktur der Energiespeichervorrichtung integriert oder lösbar mit der Rahmenstruktur verbindbar, insbesondere einrastbar.

Eine erfindungsgemäße Energiespeicheranordnung, eine erfindungsgemäße Energiespeicherzelle und ein erfindungsgemäßes Wärmeleitelement sind insbesondere zur Verwendung in einem Kraftfahrzeug vorgesehen, wobei das Kraftfahrzeug insbesondere ein Hybridfahrzeug oder ein Elektrofahrzeug ist.

Die Erfindung ist insbesondere, aber nicht nur, auf Energiespeicher mit einer Elektrodenanordnung anwendbar, die Lithium oder eine Lithiumverbindung als einen elektrochemisch aktiven Bestandteil enthält.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

Kurzbeschreibung der Zeichnungen
- Fig. 1: veranschaulicht eine Einzelbatterie in einer schematischen räumlichen Ansicht;
- Fig. 2: veranschaulicht einen inneren Aufbau der Einzelbatterie von Fig. 1 in einer schematischen Querschnittsansicht;
- Fig. 3: ist eine schematischen Schnittansicht der Einzelbatterie entlang einer strichpunktierten Linie III-III in Fig. 2 in Blickrichtung zugehöriger Pfeile;
- Fig. 4: veranschaulicht eine Batterieanordnung mit mehreren Einzelbatterien in einer schematischen räumlichen Ansicht; und
- Fig. 5: veranschaulicht einen Batteriekasten mit einem Steuergerät und mehreren Leiterschienen in einer schematischen räumlichen Ansicht.

Es ist darauf hinzuweisen, dass die Darstellungen in den Figuren schematisch sind und sich wenigstens im Wesentlichen auf die Wiedergabe von für das Verständnis der Erfindung hilfreichen Merkmalen beschränken. Auch ist darauf hinzuweisen, dass in den Figuren wiedergegebene Abmessungen und Größenverhältnisse im Wesentlichen der Deutlichkeit der Darstellung geschuldet sind und nicht notwendig einschränkend zu verstehen sind, es sei denn, aus der Beschreibung ergäbe sich etwas anderes.

Einander entsprechende Teile sind in allen Figuren mit den gleichen Bezugszeichen versehen.

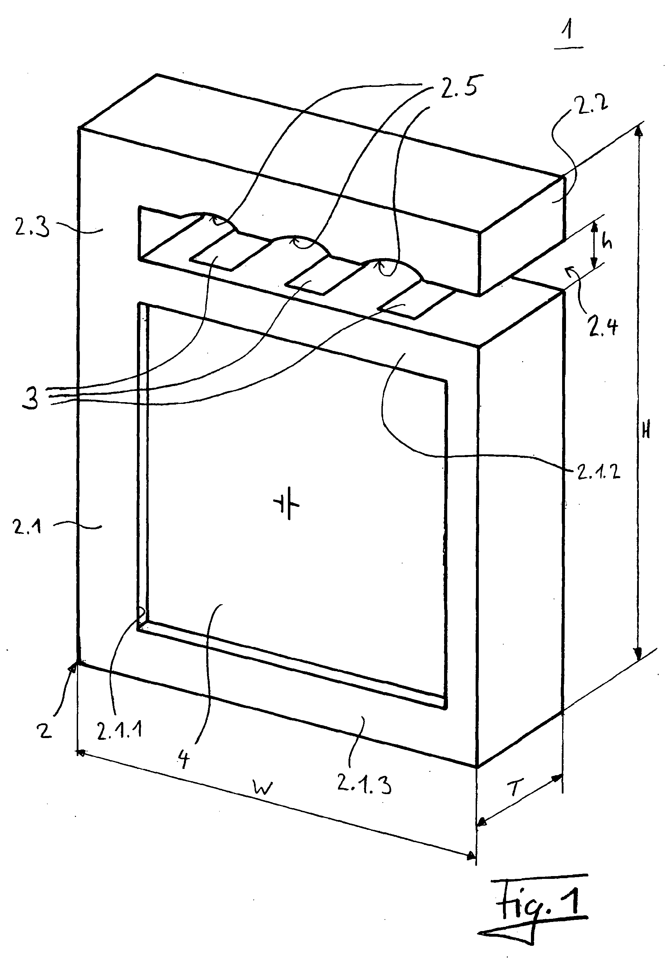

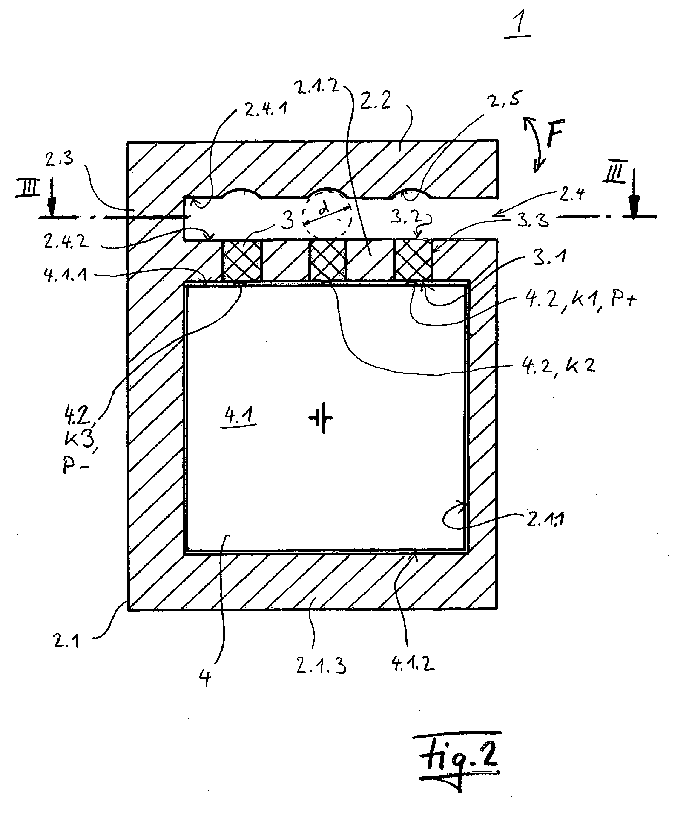

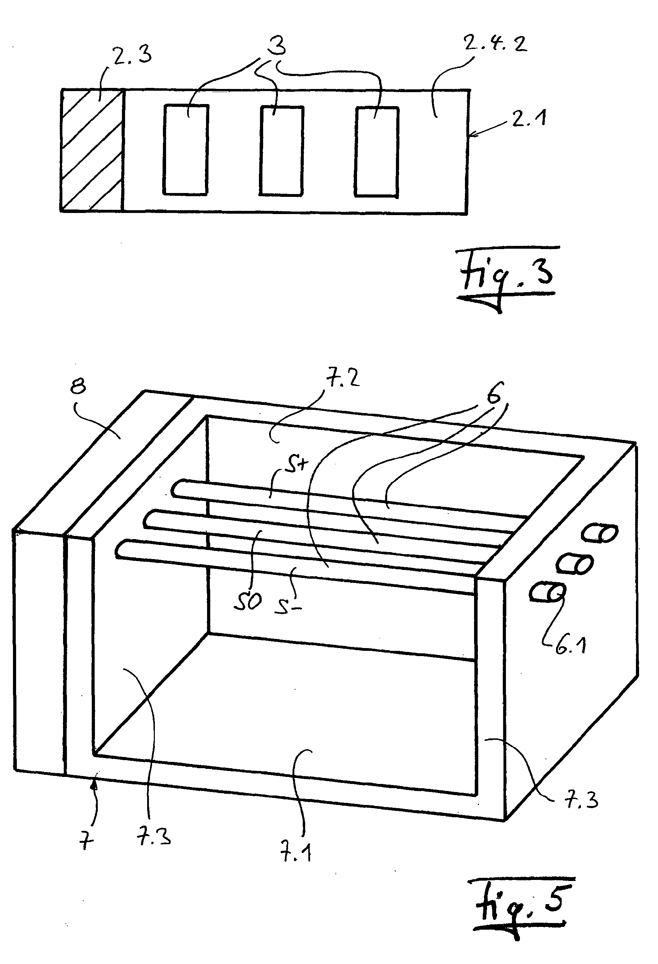

Eine Einzelbatterie 1 mit einem Rahmen 2 wird nachstehend anhand von Fig. 1 bis Fig. 3 als ein bevorzugtes Ausführungsbeispiel der Erfindung beschrieben. Dabei ist Fig. 1 eine schematische räumliche Ansicht der Einzelbatterie 1, Fig. 2 eine schematische Querschnittsansicht der Einzelbatterie 1 in einer Ebene, die durch eine Höhenrichtung H und eine Breitenrichtung W der Einzelbatterie 1 definiert ist, und ist Fig. 3 eine schematische Schnittansicht der Einzelbatterie 1 entlang einer strichpunktierten Linie III-III in Fig. 2 in Blickrichtung zugehöriger Pfeile.

Gemäß der Darstellung in Fig. 1 weist eine Einzelbatterie 1 einen Rahmen 2 mit drei darin eingelassenen Kontaktelementen 3 und einer in dem Rahmen 2 aufgenommenen Batteriezelle 4 auf.

Der Rahmen 2 weist eine flach quaderförmige (plattenförmige) Grundform mit einer Höhe H, einer Breite W und einer Dicke T auf, die in einen Hauptteil 2.1, einen Schenkel 2.2 und einen Verbindungsabschnitt 2.3, der den Schenkel 2.2 mit dem Hauptteil 2.1 verbindet, gegliedert ist. Zwischen dem Schenkel 2.2 und dem Hauptteil 2.1 ist ein Spalt 2.4 ausgebildet, dessen obere Fläche 2.4.1 den Schenkel 2.2 nach unten begrenzt und dessen untere Fläche 2.4.2 den Hauptteil 2.1 nach oben begrenzt. Der Spalt 2.4 weist eine Spalthöhe h auf.

Der Hauptteil 2.1 weist einen fensterartigen, im Querschnitt rechteckigen Ausschnitt 2.1.1 zur Aufnahme der Batteriezelle 4 auf. In einem oberen Quersteg 2.1.2 des Hauptteils 2.1, der sich zwischen der unteren Oberfläche 2.4.2 des Spalts 2.4 und einer oberen Begrenzungsfläche des Ausschnitts 2.2.1 erstreckt, sind die Kontaktelemente 3 eingelassen.

Die Kontaktelemente 3 sind aus Kupfer hergestellt und sind als wenigstens im Wesentlichen quaderförmige Leiterelemente ausgebildet, die in dem Rahmen 2 vergossen sind. Die Kontaktelemente 3 weisen eine untere Kontaktfläche 3.1, die mit der oberen Begrenzungsfläche des Ausschnitts 2.1.1 des Hauptteils 2.1 fluchtet, und eine obere Kontaktfläche 3.2, die mit der unteren Fläche 2.4.2 des Spalts 2.4 fluchtet, auf. Zwischen der oberen Kontaktfläche 3.2 und der unteren Kontaktfläche 3.1 der Kontaktelemente 3 erstrecken sich Flanken 3.3, welche sich an das Material des Rahmens 2 anschmiegen.

Die Batteriezelle 4 weist einen Zellenkörper 4.1 und drei Kontaktnippel 4.2 auf.

Der Zellenkörper 4.1 beinhaltet eine nicht näher dargestellte Elektrodenanordnung, welche eine Batteriezelle bzw. Akkumulatorzelle (Einzelzelle) ausbilden. In der Elektrodenanordnung als solcher sind in an sich typischer Weise Elektrodenfolien unterschiedlicher Polarität, insbesondere Aluminium- und/oder Kupferfolien und/oder Folien aus einer Metalllegierung, mit einer Beschichtung aus elektrochemisch aktiven Materialien, von denen wenigstens eines Lithium oder eine Lithiumverbindung enthält, übereinander gestapelt und mittels eines Separators (nicht näher dargestellt), insbesondere einer Separatorfolie, elektrisch voneinander isoliert. Elektrodenfolien und Separator bilden somit eine galvanische Anordnung, insbesondere, eine Lithium-Ionen-Sekundärzelle, die zur Aufnahme elektrischer Energie, elektrochemischen Umwandlung zur Speicherung, elektrochemischer Rückumwandlung und Abgabe elektrischer Energie einsetzbar ist. Randbereiche der Elektrodenfolien gleicher Polarität sind elektrisch miteinander verbunden, zum Beispiel, aber nicht zwingend, elektrisch leitend miteinander verpresst und/oder verschweißt, und bilden Polkontakte der Elektrodenanordnung aus. Die Elektrodenanordnung ist in einer nicht näher bezeichneten Einhausung gas- und flüssigkeitsdicht versiegelt, um den Zellenkörper 4.1 auszubilden.

Von einer Oberseite (oberen Schmalseite) 4.1.1 des Zellenkörpers 4.1 ragen drei ballig ausgebildete Kontaktnippel 4.2 ab. Die Kontaktnippel bilden Zellenkontakte K1, K2, K3 aus; sie erstrecken sich durch die Einhausung des Zellenkörpers 4.1 hindurch und sind im Inneren desselben mit Kontaktbereichen der Elektrodenanordnung verbunden. Im Einzelnen ist der einen ersten Zellenkontakt K1 ausbildende Kontaktnippel 4.2 mit einem positiven Polkontakt der Elektrodenanordnung verbunden und bilden einen positiven Zellenpol P+ der Zelle 4 aus. Weiter ist der einen zweiten Zellenkontakt K2 ausbildende Kontaktnippel 4.2 mit einem Messkontakt innerhalb der Zelle 4 verbunden und bilden einen Messanschluss der Zelle 4 aus. Schließlich ist der einen dritten Zellenkontakt K3 ausbildende Kontaktnippel 4.2 mit einem negativen Polkontakt der Elektrodenanordnung verbunden und bilden einen negativen Zellenpol P-der Zelle 4 aus.

Die Batteriezelle 4 und der Rahmen 2, insbesondere der Ausschnitt 2.1.1 des Ausschnitts 2.1, sind so zueinander dimensioniert, dass sich bei Einsetzen der Batteriezelle 4 in den Rahmen 2 die Kontaktnippel 4.2 an die untere Kontaktflächen 3.1 der Kontaktelemente 3 anpressen. Dabei stützt sich eine untere Schmalseite 4.1.2 des Zellenkörpers 4.1 an einem unteren Quersteg 2.1.3 des Hauptteils 2.1 des Rahmens 2 ab.

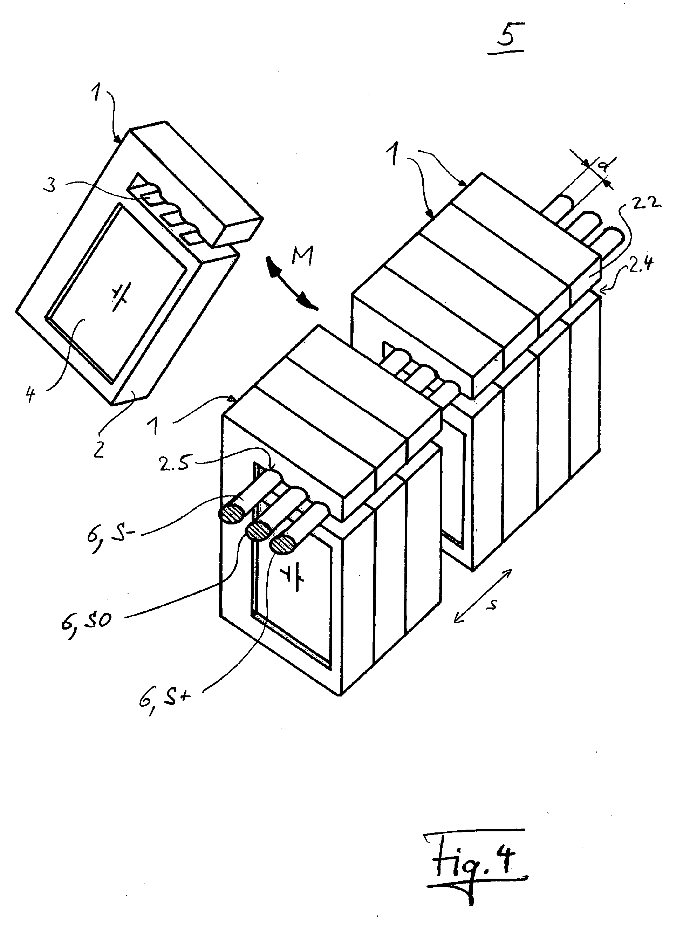

In der dem Spalt 2.4 zugewandten Fläche des Schenkels 2.2 (also der oberen Fläche 2.4.1 des Spalts 2.4) sind drei Nuten 2.5 ausgebildet, die sich parallel in Dickenrichtung des Rahmens 2 über die gesamte Dicke T des Rahmens 2 erstrecken. Die Nuten 2.5 weisen einen kreisabschnittförmigen Querschnitt auf und liegen den Kontaktelementen 3 gegenüber. Die Kreisform mit einem Durchmesser d ist an der mittleren der Nuten 2.5 in gestrichelten Linien angedeutet; der Durchmesser entspricht dem größten Abstand der Nut 2.5 (dem Nutgrund) von der unteren Fläche 2.4.2 des Spalts 2.4 bzw. von der oberen Kontaktfläche 3.2 des gegenüberliegenden Kontaktelements 3. Der Schenkel 2.2 ist ferner in einer Federrichtung F schwenkbar, wobei der Verbindungsabschnitt 2.3 als federelastisch Schwenkgelenk wirkt. Die Funktion dieser Anordnung wird im Zusammenhang mit der Beschreibung einer Batterieanordnung anhand von Fig. 4 ersichtlich werden.

Fig. 4 ist eine schematische räumliche Ansicht zur Veranschaulichung einer Batterieanordnung 5 als ein weiteres Ausführungsbeispiel der vorliegenden Erfindung.

Die Batterieanordnung 5 weist mehrere Einzelbatterien 1 gemäß Fig. 1 bis Fig. 3 und drei Leiterschienen 6 auf.

Die Einzelbatterien 1 sind in einer Stapelrichtung s aufeinander folgend angeordnet. Gemäß der Darstellung in Fig. 4 ist eine Einzelbatterie 1 aus dem Verbund herausgenommen, wodurch eine Lücke in der Anordnung 5 hinterlassen wird.

Die drei Leiterschienen 6 erstrecken sich parallel zueinander in der Stapelrichtung s. Ihr Durchmesser d entspricht dem in Fig. 2 dargestellten Kreisabschnittdurchmesser d der Nuten 2.5 mit Übermaß; der Abstand der Leiterschienen 6 entspricht dem Abstand der Nuten 2.5 in Richtung der Breite W der Einzelbatterien 1. Die Leiterschienen 6 dienen in diesem Ausführungsbeispiel als eine positive Stromsammelschiene S+, eine negative Stromsammelschiene S- und eine Signalübertragungsschiene bzw. Signalschiene S0.

Gemäß der Darstellung in Fig. 4 sind die Einzelbatterien 1 über den Spalt 2.4 auf die Leiterschienen 6 gefädelt, und die Leiterschienen 6 ruhen in den Nuten 2.5. Durch die federnde Schwenkbarkeit der Schenkel 2.2 gegenüber dem Hauptteil 2.1 des Rahmens 2 (Federrichtung F in Fig. 2) werden die Leiterschienen 6 zuverlässig an die Kontaktelemente 3 gedrückt, und ein elektrischer Kontakt wird sichergestellt. Einzelne Einzelbatterien 1 sind in Montagerichtung M aus dem Verbund lösbar und entnehmbar, wobei nur die Federkraft des Verbindungsabschnitts 2.3 als Widerstand zu überwinden ist.

Auf diese Weise wird in der gesamten Batterieanordnung 5 ein elektrischer Kontakt der positiven Stromsammelschiene S+ mit den einen positiven Zellenpol P+ ausbildenden Kontaktnippeln 4.2 der Batteriezelle 4, der negativen Stromsammelschiene S- mit den einen negativen Zellenpol P- ausbildenden Kontaktnippeln 4.2 der Batteriezelle 4, und der Signalschiene S0 mit den mittleren Kontaktnippeln 4.2 der Batteriezelle 4 hergestellt.

Die Batterieanordnung 5 bildet also insbesondere eine Parallelschaltung der Einzelbatterien 1. So kann auf einfache Weise eine Vielzahl von Einzelbatterien mit vorgegebener Einzelspannung (Batteriespannung) zu einer Batterieanordnung gewünschter Kapazität verbunden werden.

Fig. 5 veranschaulicht in einer schematischen räumlichen Ansicht einen Batteriekasten 7 mit Leiterschienen 6 und einem Steuergerät 8.

Gemäß der Darstellung in Fig. 5 ist ein Batteriekasten 7 als ein offener Quader ausgebildet mit einer Bodenwand 7.1, einer Rückwand 7.2 und zwei Seitenwänden 7.3. Der Batteriekasten 7 ist somit oben und vorne offen.

An einer Seitenwand 7.3 ist außen ein Steuergerät 8 angebracht. Zwischen den Seitenwänden 7.3 und durch diese hindurch erstrecken sich drei Leiterschienen 6. Freie Enden 6.1 ragen außerhalb des Batteriekastens 7 von den Seitenwänden 7.3 ab und enden auf einer Seite in dem Steuergerät 8.

Die Leiterschienen 6 in Fig. 5 entsprechen den Leiterschienen 6 in Fig. 4. Somit sind mehrere Einzelbatterien 1 gemäß Fig. 1 bis Fig. 3 in dem Batteriekasten 7 - zwischen den Seitenwänden 7.3 - in die Leiterschienen 6 einhakbar, um eine Batterieanordnung wie die Batterieanordnung 5 in Fig. 4 zu bilden. Die Batterieanordnung 5 in dem Batteriekasten 7 kann auch als Batterieverbund bezeichnet werden. Einzelbatterien 1 sind einzeln austauschbar, ohne den Gesamtbatterieverbund in dem Batteriekasten 7 aufzulösen; daher ist unter Umständen auch ein Austausch während des Betriebs möglich.

Das Steuergerät 8 ist ausgelegt und eingerichtet, Zustände eines an die Leiterschienen 6 angeschlossenen Batterieverbundes zu erkennen und zu verarbeiten. Beispielsweise, aber nicht nur, erkennt das Steuergerät 8 einen Spannungszustand und eine Kapazität des Batterieverbundes sowie der Einzelbatterien 1 in dem Batterieverbund. Messdaten und Steuerdaten können über die Signalschiene S0 zwischen dem Steuergerät 8 und den Einzelbatterien 1 ausgetauscht werden. Dabei kann die Signalschiene S0 beispielsweise, aber nicht nur, als serieller Bus arbeiten. An einer Seite des Steuergeräts 8 sind Polkontakte (nicht näher dargestellt) vorgesehen, die als die Pole der gesamten Batterieanordnung zu verwenden sind.

Durch nicht näher dargestellte Mittel sind mehrere Batteriekästen 7 an den freien Enden 6.1 der Leiterschienen 6 koppelbar. Dabei kann jedem Batteriekasten 7 ein Steuergerät 8 zugeordnet sein, oder ein einziges Steuergerät 8 versorgt alle angeschlossenen Batteriekästen 7 bzw. darin angeordnete Batterieverbünde.

Nachfolgend sind einige bevorzugte Abwandlungen der Erfindung dargelegt.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann, beispielsweise, aber nicht nur, wie es nachstehend angedeutet ist.

Obschon die Kontaktelemente 3 in dem Ausführungsbeispiel in dem Rahmen 2 vergossen sind, können diese auch in dem Rahmen 2 verklebt, eingeschrumpft oder dergleichen sein. Auch können die Kontaktelemente 3, die als Quader mit parallelen Flanken beschrieben wurden, auch konische, etwa von der unteren Kontaktfläche 3.1 zur oberen Kontaktfläche 3.2 zulaufende, Flanken 3.3 aufweisen, um ein unbeabsichtigtes Einwandern der Kontaktelemente 3 in den Spalt 2.4 zu vermeiden. Im Falle eines Vergießens können auch andere formschlüssige Mittel vorgesehen sein, um ein unbeabsichtigtes Wandern der Kontaktelemente 3 zu vermeiden. In einer weiteren Abwandlung können die Kontaktelemente 3 eine ganz andere Grundform, etwa eine zylindrische oder kegelstumpfförmige Form mit kreisförmigem oder ovalem Querschnitt aufweisen.

Die Kontaktelemente 3 können neben Kupfer aus jedem guten elektrischen Leitermaterial wie etwa aus Aluminium, Eisen oder dergleichen oder einer Legierung mit einem oder mehreren derselben, auch mit Kupfer, aus einem leitfähigen Kunststoff oder aus einer leitfähigen Keramik hergestellt sein. Zur Verringerung eines Oberflächenwiderstands können Kontaktoberflächen 3.1, 3.2 der Leiterelemente 3 mit einer Kontaktvermittlersubstanz wie etwa Gold, Silber oder dergleichen oder einer Legierung mit einem oder mehreren derselben, beschichtet sein.

Die unteren Kontaktflächen 3.1 der Kontaktelemente 3 können Mulden aufweisen, in welche die Kontaktnippel 4.2 der Batteriezellen 4 einrasten, um ein unbeabsichtigtes Herausfallen der Batteriezelle 4 aus dem Rahmen 2 zu erschweren.

Die oberen Kontaktflächen 3.2 der Kontaktelemente 3 können Nuten entsprechend den Nuten 2.5 in der oberen Fläche 2.4.1 der Nut 2.4 aufweisen, wobei sich die Nuten der Kontaktelemente 3 in der unteren Fläche 2.4.2 der Nut 2.4 fortsetzen, um eine zweipunktige Rastung der Leiterschienen 6 zu verwirklichen.

Der Ausschnitt 2.1.1 im Hauptteil 2.1 des Rahmens 2 wurde als fensterförmiger Durchbruch beschrieben. In einer Abwandlung kann der Ausschnitt 2.1.1. auch an einer Flachseite des Hauptteils 2.1 des Rahmens 2 geschlossen sein. Ferner können die Flachseiten (in der soeben beschriebenen Abwandlung: kann die offene Flachseite) des Hauptteils 2.1 des Rahmens 2 durch einen Deckel verschließbar sein.

Eine Nachgiebigkeit des Verbindungsabschnitts 2.3 des Rahmens 2 kann durch Einkerbung, Aushöhlung oder eine zonenweise weichere Materialauswahl erhöht werden. Alternativ kann durch eine zonenweise härtere Materialauswahl die Nachgiebigkeit verringert werden, falls dies erforderlich sein sollte. Solche zonenweise Variabilität der Materialeigenschaften ist bei Kunststoffteilen vergleichsweise leicht zu verwirklichen.

Eine Steifigkeit des Schenkels 2.2 des Rahmens 2 kann ebenfalls durch Materialwahl, durch Faserverstärkung oder durch Armierung, etwa mit einem Metallprofil, erhöht werden.

Obschon die Batteriezelle 4 in dem Ausführungsbeispiel als Einzelzelle beschrieben ist, kann die Batteriezelle 4 auch mehrere Einzelzellen aufweisen, die intern parallel und/oder seriell verschaltet sind, um eine gewünschte Polspannung und eine gewünschte Kapazität der Batteriezelle 4 zu erhalten. In einer weiteren Abwandlung können mehrere Batteriezellen 4 in dem Rahmen 2 aufgenommen sein. Dabei kann, muss aber nicht, eine Verschaltung der mehreren Batteriezellen 4 durch ein zusätzliches Bauelement, das zwischen den mehreren Batteriezellen 4 und dem oberen Quersteg 2.1.2 vorzusehen ist, verwirklicht sein. Beispielsweise, aber nicht nur, können Zellenpole der mehreren Batteriezellen 4 durch das zusätzliche Bauelement in einer Reihenschaltung verbunden werden und können die freien Enden der Reihenschaltung mit den jeweiligen Kontaktelementen 3 verbunden sein. Dabei können, müssen aber nicht, die mehreren Batteriezellen 4 mit wechselnder Pollage angeordnet sein, wodurch sich auch der Aufbau, insbesondere eine interne Verdrahtung, des zusätzlichen Bauelements vereinfachen kann.

In dem Ausführungsbeispiel sind die Batteriezellen 4 in dem Rahmen 2 aufnehmbar und aus dem Rahmen 2 entnehmbar. In einer Abwandlung bildet der Rahmen 2 selbst eine Einhausung für eine Elektrodenanordnung und kann die Einzelbatterie 1 somit als Batteriezelle (Einzelzelle oder Mehrfachzelle) ausgebildet sein, und freie Enden der Elektrodenfolien (Ableitfahnen) können direkt mit den Kontaktelementen 3 verbunden sein.

In einer weiteren Abwandlung sind Kontaktelemente im Bereich der Nuten 2.5 in dem Schenkel 2.2 angeordnet, wobei durch eine Leitungsverbindung, die insbesondere durch den Verbindungsabschnitt 2.3 geführt ist, die Polkontakte der Elektrodenanordnung der Batteriezelle 4 oder einer in den Hauptteil 2.1 des Rahmens 1 integrierten Elektrodenanordnung mit den Kontaktelementen verbunden sind. In einer Weiterbildung dieser Ausgestaltung ist die Spalthöhe h mindestens so groß wie der Leiterschienendurchmesser d und sind in der unteren Fläche 2.4.2 des Spalts 2.4, gegenüber den Nuten 2.5, federnde Druckelemente vorgesehen, welche bei Einführen der Leiterschienen 6 in die Fläche 2.4.2 zurückweichen und dann, wenn die Leiterschienen 6 in den Nuten 2.5 einrasten, von unten gegen die Leiterschienen 6 drücken; bei dieser Weiterbildung kann auf eine elastisch schwenkbare Auslegung des Schenkels 2.2 verzichtet werden. Bei dieser Abwandlung kann allein durch die Wirkung der Schwerkraft ein unbeabsichtigtes Abheben der Leiterschienen 6 von den Kontaktelementen erschwert werden.

Es versteht sich, dass die Anzahl der Leiterschienen 6 von der dargestellten Anzahl abweichen kann. Beispielsweise reichen zwei Leiterschienen als positive und negative Leiterschiene aus, um die Batteriespannung der Einzelbatterien 1 abzugreifen. Andererseits, aber nicht nur, kann oder können zusätzliche Leiterschienen zum Abgreifen verschiedener Zwischenspannungen der Einzelbatterien 1 oder zur Erfüllung weiterer Signalübertragungsaufgaben vorgesehen sein.

Leiterschienen 6, insbesondere, aber nicht nur, die Signalschiene S0, können mehradrig, und Kontaktelemente 3 können mehrpolig ausgebildet sein. Insbesondere, aber nicht nur, kann ein Kontaktelement 3 mehrere sich in Stapelrichtung s bzw. in Dickenrichtung T parallel erstreckende und voneinander isolierte Kontaktzonen aufweisen, die mit entsprechenden Kontaktzonen einer Leiterschiene 6 korrelieren, wenn die zugehörige Leiterschiene 6 verdrehsicher in dem Batteriekasten 7 gelagert ist, sodass eine eindeutige Positionierung sichergestellt ist. Weiter können Kontaktelemente 3 sowohl an der oberen Fläche 2.4.1 als auch an der unteren Fläche 2.4.2 vorgesehen sein und kann eine zugehörige Leiterschiene getrennte Leiterbereiche im oberen und unteren Bereich aufweisen; auch in diesem Fall ist eine verdrehsichere Lagerung erforderlich.

Die Einzelbatterien 1 können eine Greifeinrichtung zum Greifen der Einzelbatterie 1 aufweisen. Die Einzelbatterien 1 können auch eine Deaktivierungseinrichtung zum Trennen von Leitungsverbindungen innerhalb der Einzelbatterie 1 aufweisen, um unerwünschte Stromkontakte beim Entfernen zu vermeiden. Eine solche Deaktivierungseinrichtung kann mit einer Greifeinrichtung operativ gekoppelt sein. Auch kann eine Verriegelungseinrichtung vorgesehen, welche durch manuellen Eingriff oder selbsttätig dann, wenn die Greifeinrichtung losgelassen wird, den Schenkel 2.2 mit dem Hauptteil 2.1 verriegelt.

Die Batterieanordnung 5 ist eine Energiespeicheranordnung im Sinne der Erfindung. Jede Einzelbatterie 1 ist ein Teilenergiespeicher sowie eine Energiespeichervorrichtung im Sinne der Erfindung. Die Leiterschienen 6 bilden eine Kontaktierungseinrichtung im Sinne der Erfindung. Der Rahmen 2 ist eine Rahmenstruktur im Sinne der Erfindung. Jede Batteriezelle 4 oder eine in den Rahmen 2 integrierte Elektrodenanordnung ist ein Energiespeicherabschnitt im Sinne der Erfindung. Die Kontaktnippel 4.2 sind Anschlussenden im Sinne der Erfindung. Wenn die Einzelbatterien 1 als integrierte Batteriezellen oder Mehrfachzellen ausgebildet sind, können Ableitfahnen oder sonstige Polkontakte einer Elektrodenanordnung als Anschlussenden im Sinne der Erfindung verstanden werden. Obere Kontaktflächen 3.2 der Kontaktelemente 3 bilden einen Kontaktabschnitt im Sinne der Erfindung. Der Schenkel 2.2 ist ein Druckabschnitt im Sinne der Erfindung. Auch erwähnte, aber nicht näher dargestellte Druckelemente können ein Druckabschnitt im Sinne der Erfindung sein. Der Verbindungsabschnitt 2.3 ist ein Federabschnitt im Sinne der Erfindung. Der Spalt 2.4 ist ein Aufnahmeabschnitt im Sinne der Erfindung. Nuten 2.5 sind Rastabschnitte im Sinne der Erfindung.

### Liste der Bezugszeichen:

- 1: Einzelbatterie
- 2: Rahmen
- 2.1: Hauptteil
- 2.1.1: Ausschnitt
- 2.1.2: Oberer Quersteg
- 2.1.3: Unterer Quersteg
- 2.2: Schenkel
- 2.3: Verbindungsabschnitt
- 2.4: Spalt
- 2.4.1: Obere Fläche
- 2.4.2: Untere Fläche
- 2.5: Nut
- 3: Kontaktelement
- 3.1: Untere Kontaktfläche
- 3.2: Obere Kontaktfläche
- 3.3: Flanke
- 4: Batteriezelle
- 4.1: Zellenkörper
- 4.2: Kontaktnippel
- 5: Batterieanordnung
- 6: Leiterschiene
- 6.1: Freies Ende
- 7: Batteriekasten
- 8: Steuergerät

- d: Durchmesser
- h: Spalthöhe
- s: Stapelrichtung

- F: Federrichtung
- H: Höhe
- K1, K2, K3: Zellenkontakt
- M: Einbaurichtung (Montagerichtung)
- P+: Positiver Zellenpol
- P-: Negativer Zellenpol
- S+: Positive Stromsammelschiene
- S-: Negative Stromsammelschiene
- S0: Signalschiene
- T: Dicke
- W: Breite

Es wird ausdrücklich darauf hingewiesen, dass vorstehende Bezugszeichenliste integraler Bestandteil der Beschreibung ist.

## Patentansprüche

1. Energiespeichervorrichtung (1) mit einer Rahmenstruktur (2), welche einen Energiespeicherabschnitt (4) mit einer Elektrodenanordnung und wenigstens zwei Anschlussenden (4.2) hält, wobei die Rahmenstruktur (2) einen Aufnahmeabschnitt (4.2) zur Aufnahme wenigstens eines Abschnitts einer Kontaktierungseinrichtung (6) zur Kontaktierung mehrerer Energiespeichervorrichtungen (1) miteinander aufweist, **dadurch gekennzeichnet, dass** die Rahmenstruktur (2) einen Druckabschnitt (2.2) und einen Kontaktabschnitt (3) aufweist, wobei die Anschlussenden (4.2) des Energiespeicherabschnitts (4) mit dem Kontaktabschnitt (3) verbunden sind und wobei der Druckabschnitt (2.2) ausgelegt und eingerichtet ist, die Kontaktierungseinrichtung (6) elastisch gegen den Kontaktabschnitt (3) zu drücken.

2. Energiespeichervorrichtung (1) gemäß Anspruch 1, **dadurch gekennzeichnet, dass** der Energiespeicherabschnitt in der Rahmenstruktur integriert ist.

3. Energiespeichervorrichtung (1), gemäß Anspruch 1, **dadurch gekennzeichnet, dass** der Energiespeicherabschnitt (4) lösbar mit der Rahmenstruktur (2) verbindbar, insbesondere einrastbar, ist.

4. Energiespeicheranordnung (5), mit einer Mehrzahl von Energiespeichervorrichtungen (1) nach einem der vorstehenden Ansprüche als Teilenergiespeicher (1), und einer Kontaktierungseinrichtung (6) zur Kontaktierung mehrerer Teilenergiespeicher (1) untereinander.

5. Energiespeicheranordnung (5) gemäß Anspruch 4, **dadurch gekennzeichnet, dass** die Kontaktierungseinrichtung (6) wenigstens zwei Leiterschienen (6) aufweist.

6. Energiespeicheranordnung (5) gemäß Anspruch 4 oder 5, **dadurch gekennzeichnet, dass** von den Teilenergiespeichern (1) der Druckabschnitt (2.2) durch einen Federabschnitt (2.3) der Rahmenstruktur (2) elastisch bewegbar ist.

7. Energiespeicheranordnung (5) gemäß einem der Ansprüche 4 bis 6, **dadurch gekennzeichnet, dass** der Aufnahmeabschnitt (2.4) einseitig offen ist.

8. Energiespeicheranordnung (5) gemäß einem der Ansprüche 4 bis 7, **dadurch gekennzeichnet, dass** der Aufnahmeabschnitt (2.4) wenigstens einen Rastabschnitt (2.5) zum Einrasten der Kontaktierungseinrichtung (6) aufweist.

9. Verfahren zum Betrieb einer Energiespeicheranordnung (5) gemäß einem der Ansprüche 4 bis 8, **gekennzeichnet durch** die Schritte:
• Versorgen eines Verbrauchers aus der Energiespeicheranordnung (5) mit insbesondere elektrischer Energie,
• Entnehmen eines Teilenergiespeichers (1) aus der Energiespeicheranordnung (5), wobei der Verbraucher **durch** die Energiespeicheranordnung (5) versorgt ist,
• Einsetzen eines Teilenergiespeichers (1) in die Energiespeicheranordnung (5), wobei der Verbraucher **durch** die Energiespeicheranordnung (5) versorgt ist.

## Claims

1. An energy storage apparatus (1) comprising a frame structure (2) which contains an energy storage section (4) having an electrode array and at least two connecting ends (4.2), wherein the frame structure (2) comprises a receiving section (4.2) to accommodate at least one section of a contacting device (6) for contacting a plurality of energy storage apparatus (1) to one another,
**characterized in that** the frame structure (2) comprises a pressure section (2.2) and a contact section (3), wherein the connecting ends (4.2) of the energy storage section (4) are connected to the contact section (3) and wherein the pressure section (2.2) is designed and arranged to elastically push the contacting device (6) against the contact section (3).

2. The energy storage apparatus (1) according to claim 1, **characterized in that** the energy storage section is integrated into the frame structure.

3. The energy storage apparatus (1) according to claim 1, **characterized in that** the energy storage section (4) is detachably connected to, particularly engageable with, the frame structure (2).

4. An energy storage arrangement (5) comprising a plurality of energy storage apparatus (1) in accordance with any one of the preceding claims as partial energy stores (1) and a contacting device (6) for contacting a plurality of partial energy stores (1) to one another.

5. The energy storage arrangement (5) according to claim 4, **characterized in that** the contacting device (6) comprises at least two conductor rails (6).

6. The energy storage arrangement (5) according to claim 4 or 5, **characterized in that** the pressure section (2.2) of the partial energy stores (1) can be elastically moved by a spring section (2.3) of the frame structure (2).

7. The energy storage arrangement (5) according to any one of claims 4 to 6, **characterized in that** the receiving section (2.4) is open on one side.

8. The energy storage arrangement (5) according to any one of claims 4 to 7, **characterized in that** the receiving section (2.4) comprises at least one engaging section (2.5) to engage the contacting device (6).

9. A method of operating an energy storage arrangement (5) in accordance with any one of claims 4 to 8, **characterized by** the steps of:
• supplying a load with particularly electrical energy from the energy storage arrangement (5),
• removing a partial energy store (1) from the energy storage arrangement (5), wherein the load is supplied by the energy storage arrangement (5),
• inserting a partial energy store (1) into the energy storage arrangement (5), wherein the load is supplied by the energy storage arrangement (5).

## Revendications

1. Dispositif accumulateur d'énergie (1) avec une structure cadre (2), laquelle maintient une section accumulatrice d'énergie (4) avec un agencement d'électrodes et au moins deux extrémités de raccordement (4.2), dans lequel la structure cadre (2) présente une section de logement (4.2) pour loger au moins une section d'un dispositif de mise en contact (6) afin de mettre en contact ensemble plusieurs dispositifs accumulateurs d'énergie (1), **caractérisé en ce que** la structure cadre (2) présente une section de pression (2.2) et une section de contact (3), dans lequel les extrémités de raccordement (4.2) de la section accumulatrice d'énergie (4) sont reliées à la section de contact (3) et dans lequel la section de pression (2.2) est dimensionnée et disposée pour appuyer le dispositif de mise en contact (6) de façon élastique contre la section de contact (3).

2. Dispositif accumulateur d'énergie (1) selon la revendication 1, **caractérisé en ce que** la section accumulatrice d'énergie est intégrée dans la structure cadre.

3. Dispositif accumulateur d'énergie (1), selon la revendication 1, **caractérisé en ce que** la section accumulatrice d'énergie (4) peut être reliée de façon détachable, notamment en pouvant être verrouillée, à la structure cadre (2).

4. Dispositif accumulateur d'énergie (5), avec une pluralité de dispositifs accumulateurs d'énergie (1) selon l'une des revendications précédentes comme accumulateurs d'énergie partiels (1) et un dispositif de mise en contact (6) pour mettre en contact plusieurs accumulateurs d'énergie partiels (1) entre eux.

5. Dispositif accumulateur d'énergie (5) selon la revendication 4, **caractérisé en ce que** le dispositif de mise en contact (6) présente au moins deux rails conducteurs (6).

6. Dispositif accumulateur d'énergie (5) selon la revendication 4 ou 5, **caractérisé en ce que** la section de pression (2.2) peut être déplacée de façon élastique des accumulateurs d'énergie partiels (1) par une section à ressort (2.3) de la structure cadre (2).

7. Dispositif accumulateur d'énergie (5) selon l'une des revendications 4 à 6, **caractérisé en ce que** la section de logement (2.4) est ouverte d'un côté.

8. Dispositif accumulateur d'énergie (5) selon l'une des revendications 4 à 7, **caractérisé en ce que** la section de logement (2.4) présente au moins une section à encoche (2.5) pour engager le dispositif de mise en contact (6).

9. Procédé pour le fonctionnement d'un dispositif accumulateur d'énergie (5) selon l'une des revendications 4 à 8, **caractérisé par** les étapes :
• d'approvisionnement d'un utilisateur en énergie notamment électrique à partir du dispositif accumulateur d'énergie (5),
• d'extraction d'un accumulateur d'énergie partiel (1) du dispositif accumulateur d'énergie (5), dans lequel l'utilisateur est approvisionné par le dispositif accumulateur d'énergie (5),
• d'insertion d'un accumulateur d'énergie partiel (1) dans le dispositif accumulateur d'énergie (5), l'utilisateur étant approvisionné par le dispositif accumulateur d'énergie (5).
